(19) Europäisches Patentamt
European Patent Office
Office européen des brevets

(11) **EP 4 644 077 A1**

(12) **EUROPEAN PATENT APPLICATION**
published in accordance with Art. 153(4) EPC

(43) Date of publication:
**05.11.2025 Bulletin 2025/45**

(51) International Patent Classification (IPC):
**B29B 17/02** (2006.01)      **D01G 11/00** (2006.01)
**B29B 17/00** (2006.01)      **B29B 17/04** (2006.01)

(21) Application number: **24811304.5**

(52) Cooperative Patent Classification (CPC):
Y02W 30/62

(22) Date of filing: **03.05.2024**

(86) International application number:
**PCT/KR2024/006037**

(87) International publication number:
**WO 2024/242365 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.05.2023 KR 20230065165**

(71) Applicant: **Kolon Industries, Inc.**
**Seoul 07793 (KR)**

(72) Inventors:
• **KIM, Wan Jin**
  **Seoul 07793 (KR)**
• **LEE, Dong Eun**
  **Seoul 07793 (KR)**
• **PARK, Hong Kwan**
  **Seoul 07793 (KR)**
• **YOON, Joon Young**
  **Seoul 07793 (KR)**

(74) Representative: **Vossius & Partner**
**Patentanwälte Rechtsanwälte mbB**
**Siebertstraße 3**
**81675 München (DE)**

(54) **METHOD FOR PRODUCING REGENERATED FIBER**

(57)     The present invention relates to a method for manufacturing recycled fibers which includes adding a pretreated fiber composite material to the cartridge; moving the cartridge to which the pretreated fiber composite material is added; exposing the cartridge to superheated steam and an oxidizing agent; removing a matrix resin and char from the pretreated fiber composite material to manufacture a recycled fiber; and moving the cartridge including the recycled fiber and collecting the recycled fiber from the cartridge, and a decomposition rate of fiber composite materials can be improved while minimizing the decrease in tensile strength of the finally manufactured recycled fiber.

FIG. 1

**Description**

**CROSS-REFERENCE TO RELATED APPLICATION**

This application claims priority to and the benefit of Korean Patent Application No. 10-2023-0065165 filed in the Korean Intellectual Property Office on May 19, 2023, the entire contents of which are incorporated herein by reference.

## BACKGROUND OF THE INVENTION

**(a) Field of the Invention**

The present invention relates to a method for manufacturing recycled fibers.

**(b) Description of the Related Art**

Fiber composite materials, in which a thermosetting or thermoplastic resin (matrix resin) is generally mixed in carbon fibers or glass fibers, exhibit high strength, high elasticity, light weight, heat resistance, and chemical resistance and thus are widely used as industrial materials such as aerospace, wind power generation, vehicles, etc. However, the fiber composite materials are difficult to decompose due to a high bond of the carbon fibers and the glass fibers and the resin and particularly, if a thermosetting resin is used, the fiber composite materials are impossible to recycle and so, mostly discarded and thus incinerated or landfilled. Recently, regulations on waste disposals of the fiber composite materials such as carbon composite materials are being strengthened. Specifically, the incineration is impossible in Europe, and the landfilling is limitedly allowed in some countries but tends to be more strongly regulated. Accordingly, technologies of recovering the carbon fibers or the glass fibers form the fiber composite materials may be environment-friendly by reducing generation of wastes and also, economical by recycling and reusing the carbon fibers or glass fibers, which are expensive.

Currently, technologies of recovering carbon fibers from carbon fiber composite materials among the fiber composite materials largely include a thermal decomposition method and a solvent addition method. The thermal decomposition method is the mostly widely used due to its simple process but has a disadvantage of generating a resin residue (char) on the recycled fiber surface after the decomposition and deteriorating properties of the recovered carbon fibers (recycled fibers). In addition, there are more problems of using lots of energy for heating a large-capacity furnace and causing air pollutions as the decomposed resin is converted into gaseous substance and exhausted. The solvent addition method recovers the carbon fibers (recycled fibers) with stable properties and generates no exhaust gas and thus is known to be environment-friendly but has problems of treating and recovering decomposition materials including a solvent discharged as wastewater. In addition, the solvent addition method requires relatively long decomposition reaction time and has difficulties of varying decomposition conditions such as applied solvent, time, temperature, etc. depending on types and compositions of resins which are subject to the decomposition. Furthermore, the solvent addition method, to which processes such as a pretreatment, a decomposition reaction, washing, drying, etc. are necessarily applied, has disadvantages of a complex process and long process time.

Accordingly, recent research and development of decomposition technologies are directed toward combining economical technologies of reducing energy consumption, which is a drawback of thermal decomposition, and minimizing the complex process and the long decomposition time of the solvent-adding decomposition and environment-friendly technologies of recycling even the decomposition materials generated form the resins in addition to the carbon fibers.

## SUMMARY OF THE INVENTION

Accordingly, the present inventors conducted research from various angles to solve the above problem, and as a result, they completed a method for manufacturing recycled fiber which prevents the deterioration of the physical properties of recycled fibers such as carbon fiber recovered from fiber composite materials, and at the same time, cools and condenses superheated steam, converts it to water, recovers it, and then recycles the resin, which is a decomposed material, through separation and purification.

Therefore, the purpose of the present invention is to provide a method for manufacturing eco-friendly recycled fiber that can obtain recycled fiber with suppressed deterioration of physical properties.

In order to achieve the above objects, a method for manufacturing recycled fiber includes adding a pretreated fiber composite material to the cartridge; moving the cartridge to which the pretreated fiber composite material is added, exposing the cartridge to superheated steam and an oxidizing agent, removing a matrix resin and char from the pretreated fiber composite material to manufacture a recycled fiber; moving the cartridge including the recycled fiber and collecting the recycled fiber from the cartridge.

The exposing of the cartridge to superheated steam and an oxidizing agent may include first exposing the cartridge to which the pretreated fiber composite material is added to superheated steam, then moving the cartridge, and exposing it to an oxidizing agent.

The present invention may further include, before first exposing the cartridge to which the pretreated fiber composite material is added to superheated steam, and then exposing it to an oxidizing agent, condensing a gaseous matrix resin decomposed from the pretreated fiber composite material into a liquid state using cooling water and removing it.

The condensing of a gaseous matrix resin decomposed from the pretreated fiber composite material into a liquid state using cooling water and removing it may include escaping the gaseous matrix resin decomposed from the pretreated fiber composite material from the cartridge by exposure to the superheated steam, reacting it with cooling water separately present in the cartridge, and removing liquid condensate.

The oxidizing agent may include air.

The fiber composite material may be a matrix resin mixed with 'a carbon fiber, a glass fiber, or a mixture thereof'.

The matrix resin may include an aromatic hydrocarbon-based compound.

The aromatic hydrocarbon-based compound may include a phenolic compound.

The aromatic hydrocarbon compound may include bisphenol A, and the bisphenol A may be included in an amount of greater than or equal to 30 wt% based on a total amount of the aromatic hydrocarbon compound.

The pretreated fiber composite material may be a crushed or cut fiber composite material.

The superheated steam may have a temperature range of 400 °C to 900 °C.

The cartridge to which the pretreated fiber composite material is added may be exposed to the superheated steam for 30 to 120 minutes.

The exposing to superheated steam may include spraying the superheated steam into the cartridge to which the pretreated fiber composite material is added, wherein the superheated steam is injected into the cartridge at a flow rate of 10 kg/h to 30 kg/h.

The exposing to the oxidizing agent may include spraying the superheated steam into the cartridge to which the pretreated fiber composite material is added, and then spraying the oxidizing agent into the cartridge, wherein the oxidizing agent is sprayed at a flow rate of greater than or equal to 5 L/min.

The present invention may further include first exposing the cartridge to nitrogen after adding the pretreated fiber composite material to the cartridge before exposing the cartridge to the superheated steam.

The present invention may further include first exposing the cartridge to nitrogen after producing the recycled fiber and before moving the cartridge including the recycled fiber.

The char may exist on the surface of the recycled fiber from which the matrix resin is removed.

In the method for manufacturing recycled fiber according to the present invention, by using a pretreated fiber composite material, exposing the pretreated fiber composite material to superheated steam, controlling the temperature, exposure time, flow rate, etc. of the superheated steam when exposed to superheated steam, and furthermore additionally adding an oxidizing agent such as air with a separately controlled flow rate in addition to superheated steam, deterioration in the physical properties of recovered recycled fiber is minimized, and by using a cartridge method rather than a roller method, the process defect rate is significantly lower and the process is simple, which significantly shortens the process time, the matrix resin, which is one of the decomposition products, is converted into condensate using cooling water rather than external air, making it possible to easily recycle the matrix resin. Furthermore, because it is possible to quickly generate condensate, energy usage can be greatly reduced, and the economic feasibility and productivity of the recycled fiber manufacturing process can be dramatically improved compared to conventional pyrolysis methods.

## BRIEF DESCRIPTION OF THE DRAWINGS

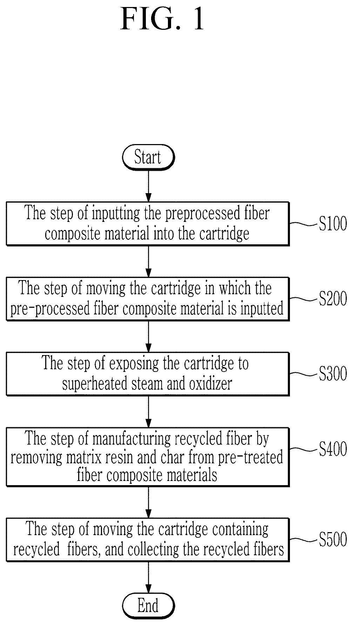

FIG. 1 is a flow chart sequentially showing a method for manufacturing recycled fiber according to the present invention.

## DETAILED DESCRIPTION OF THE EMBODIMENTS

Hereinafter, the present invention will be described in more detail.

The advantages and features of the present disclosure and the methods for accomplishing the same will be apparent from the embodiments described hereinafter. However, the embodiments should not be construed as being limited to the embodiments set forth herein. Unless otherwise defined, all terms (including technical and scientific terms) used herein have the same meaning as commonly understood by one of ordinary skill in the art. The terms defined in a generally-used dictionary may not be interpreted ideally or exaggeratedly unless clearly defined.

The terms used in the present invention are only used to describe specific embodiments and are not intended to limit the present invention. Singular expressions include plural expressions unless the context clearly dictates otherwise.

In the present invention, terms such as "include" or "have" are intended to designate the presence of features, numbers, steps, operations, components, parts, or combinations thereof described in the specification, but it should be understood that this does not exclude in advance the presence or addition of one or more other features, numbers, steps, operations, components, parts, or combinations thereof.

Superheated steam refers to high-temperature dry steam made by evaporating water and heating it above the saturation temperature, and is a heat medium that contains more heat than heated air. The superheated steam has a high heat transfer rate at the same pressure and has a high heat density, and thus it can shorten a heating time of the object to be heated through rapid heating. In addition, the superheated steam is a gaseous substance composed only of water molecules, and thus it can maintain an inert state due to the absence of oxygen, and has very high thermal efficiency due to heat transfer through complex heat transfer (convection, radiation, and condensation). Therefore, the technology for recovering recycled fibers such as carbon fiber using superheated steam has the advantage of being able to remove resin more quickly by spraying superheated steam directly on a decomposition object.

However, it is inevitable that the physical properties of recycled fibers such as carbon fiber will inevitably deteriorate, and if the physical properties of the recycled fibers are severely deteriorated, they cannot be recycled. In addition, since there is sufficient concern that a resin decomposed along with recycled fiber may become an environmental pollution issue in itself, there has been a continued need for more progressive technological improvements in decomposition technology using superheated steam.

In the method for manufacturing recycled fiber in which superheated steam is sprayed, if a method of moving the fiber composite material through a roller is conventionally used, the fiber composite material is moved in the form of a cartridge rather than the roller, and the gaseous matrix resin decomposed due to superheated steam spraying is condensed using cooling water rather than external air, thereby, dramatically improving eco-friendliness, economic feasibility, and productivity of the recycled fiber manufacturing process (in particular, eco-friendly issues such as fine dust scattering have always been an issue when using conventional rollers, but there is no room for such problems to occur when using cartridges. In addition, cartridges can be used repeatedly through washing, while rollers require periodic replacement, which makes using cartridges much more advantageous in terms of eco-friendliness). Furthermore, by pretreating the fiber composite material, exposing it to superheated steam, and controlling the temperature, exposure time, and flow rate of the superheated steam, the deterioration of the physical properties of the recovered carbon fiber, etc., is minimized, thereby reducing the previously recovered carbon fiber and manufacturing recycled fibers with much better physical properties than existing recycled fibers.

Referring to FIG. 1, the method for manufacturing recycled fiber according to the present invention includes adding a pretreated fiber composite material to the cartridge (S100); moving the cartridge to which the pretreated fiber composite material is added (S200); exposing the cartridge to superheated steam and an oxidizing agent (S300); removing a matrix resin and char from the pretreated fiber composite material to manufacture a recycled fiber (S400); and moving the cartridge including the recycled fiber to collect the recycled fiber (S500).

That is, the pretreated fiber composite material is decomposed by superheated steam into recycled fibers and matrix resin, the recycled fibers are sequentially moved through the cartridge and recovered, and as described later, the matrix resin is changed from gaseous state to liquid condensate by cooling water and moved to the condensate tank, and can then be recycled through separation and purification processes. The recovered recycled fibers are chopped and milled.

In other words, according to the method for manufacturing recycled fiber according to the present invention, recycled fiber with minimized physical property degradation and recyclable matrix resin can be easily obtained from the fiber composite material through a series of continuous processes.

Specifically, the exposing of the cartridge to the superheated steam and the oxidizing agent may include first exposing the cartridge to which the pretreated fiber composite material is added to superheated steam, then moving the cartridge, and exposing it to an oxidizing agent. The exposing of the cartridge to superheated steam first may be more advantageous for removing matrix resin and char than first exposing it to an oxidizing agent.

For example, the method for manufacturing recycled fiber according to the present invention may further include condensing a gaseous matrix resin decomposed from the pretreated fiber composite material into a liquid state using cooling water and removing it, after first exposing the cartridge including the pretreated fiber composite material to superheated steam, and before exposing it to an oxidizing agent. By condensing the matrix resin decomposed from the pretreated fiber composite material using cooling water rather than external air, the matrix resin can be removed much more easily and more completely. Specifically, the matrix resin in a gaseous state decomposed from the pretreated fiber composite material by exposure to the superheated steam escapes from the cartridge, and reacts with coolant that is separate from the cartridge to become condensate in a liquid state, and the condensate can be moved to a separate condensate tank and finally removed.

The fiber composite materials that can be used for superheated steam decomposition largely include carbon fiber composite materials (CFRP) and glass fiber composite materials (GFRP), may be used for decomposition regardless of structure, shape, or type of material, and a reinforcement material and a matrix resin are usually mixed therein. Fibrous materials used as reinforcement materials may include carbon fiber, glass fiber, etc., and the matrix resin includes thermosetting resins such as epoxy, phenol, unsaturated polyester, polyurethane, melamine, urea, etc., and thermoplastic resins such as polyethylene, polypropylene, polystyrene, and polyvinyl chloride, polyamide, polycarbonate, and polyimide. Generally used fiber composite materials are a mixture of the reinforcement material listed above and matrix resin at a certain ratio, and a ratio of the reinforcement material and resin may vary depending on the application.

For example, the matrix resin may include an aromatic hydrocarbon-based compound, the aromatic hydrocarbon-based compound may include a phenolic compound, and the phenolic compound may include phenol, o-cresol, p-cresol, p-ethylphenol, p-isopropylphenol, p-isopropenylphenol, p-hydroxy-2,2-diphenylpropane, p-hydroxy-3-methyl-2,2-diphenylpropane, 2-(4-hydroxyphenyl)-2 (4'-methoxyphenyl)propane, bisphenol A, 2-(4-hydroxy-3-methylphenyl)-2-(4'-hydroxyphenyl)propane, 2-(benzofu-5-yl)-2-(p-hydroxyphenyl)propane, or a combination thereof, but is not necessarily limited thereto.

However, the aromatic hydrocarbon compound, specifically the phenolic compound, may include the bisphenol A.

For example, the bisphenol A may be included in the largest amount among the aromatic hydrocarbon compounds (specifically, phenolic compounds), for example, greater than or equal to 30 wt%, for example, greater than or equal to 50 wt% based on a total amount of the phenolic compounds. If the composition of the matrix resin including an aromatic hydrocarbon compound (specifically, a phenolic compound) including bisphenol A in the above content range is as described above, it will be very easy to separately recover it and recycle it through separation, filtration, and purification.

For example, the pretreated fiber composite material may be a crushed or cut fiber composite material. It may be advantageous to crush and cut fiber composite materials used in decomposition using superheated steam into a certain size and shape for use in the process in terms of preventing deterioration of the physical properties of the ultimately obtained recycled fiber. For example, the crushing method includes a shredder, chopper, cracker mill, hammer mill, etc., and the fiber composite material can be crushed into a certain size range. However, the crushed composite material is non-uniform in size and generates a lot of dust and powder, and thus the effect of preventing a decrease in the quality and yield of the recovered carbon fiber may be halved and the working environment may worsen. However, in the case of fiber composite materials manufactured using a cutting machine, since the amount of dust and powder generated as described above is small to increase a yield and can be cut to a certain size, a fiber length of recycled fibers, such as recovered carbon fibers, is relatively uniform and it is possible to obtain recycled fibers with minimal quality degradation. In other words, in the pretreatment, cutting rather than crushing may be more advantageous in terms of preventing deterioration of the physical properties of the recycled fiber.

After the pretreated fiber composite material is introduced into the cartridge, it is automatically moved and exposed to superheated steam and oxidizing agent (specifically, the superheated steam and oxidizing agent are sequentially sprayed into the automatically moved cartridge) to cause decomposition.

For example, according to the method for manufacturing recycled fibers according to the present invention, the decomposition rate of fiber composite materials is very excellent. Herein, the decomposition rate means a value according to Equation 1 below.

[Equation 1]

$$\text{Decomposition rate (wt\%)} = \{(A - B) / (A \times C)\} \times 100$$

In Equation 1,

A is a weight (g) of the fiber composite material before decomposition,
B is a weight (g) of the fiber composite material after decomposition, and
C is a matrix resin content (wt%) in the fiber composite material based on a total amount of fiber composite material before decomposition.

The superheated steam sprayed into the cartridge into which the pretreated fiber composite material is sprayed by using a superheated steam generator, wherein the superheated steam may be heated at for example, 400 °C to 900 °C, for example, 400 °C to 800 °C, for example, 500 °C to 900 °C, or for example, 500 °C to 800 °C. If the superheated steam has a temperature of less than 400 °C, a decomposition rate may be sharply deteriorated, but if the superheated steam has a temperature of greater than 900 °C, tensile strength of recovered (produced) recycled fibers may be lowered.

For example, the superheated steam within the temperature ranges may be sprayed into the cartridge for 30 minutes to 120 minutes, for example, 30 minutes to 110 minutes, for example, 30 minutes to 100 minutes, or for example, 30 minutes to 90 minutes. If the superheated steam within the temperature ranges is sprayed into the cartridge for less than 30 minutes, the decomposition rate may be sharply deteriorated, but if the superheated steam within the temperature ranges is sprayed into the cartridge for greater than 120 minutes, because an increase in the decomposition rate and a decrease in the tensile strength may not be significant, it may be uneconomical to expose the pretreated fiber composite material for greater than 120 minutes to the superheated steam within the temperature ranges.

For example, if the superheated steam within the temperature ranges is sprayed into the cartridge at a flow rate of 10 kg/h to 30 kg/h, for example, 10 kg/h to 25 kg/h, or for example, 10 kg/h to 20 kg/h within the time ranges. If the superheated steam flow rate is less than 10 kg/h or greater than 30 kg/h, the tensile strength of the recycled fibers may be lowered.

A char consisting of a trace amount of carbon resulting from matrix resins decomposed from the fiber composite materials due to exposure to the superheated steam may remain on the surface of reinforcement materials (carbon fibers and/or glass fibers). The char occurs at a ratio of about 5 wt% to 10 wt% of the resins included in the fiber composite materials, and due to the char, the reinforcement materials may not be separated alone but manufactured in a lumped form. The char-containing reinforcement materials, which have low flexibility and act as impurities in the subsequent process, need to be removed. The char, which is a carbonaceous material, may be difficult to remove by using the superheated steam alone under the inert atmosphere but may be removed by adding an oxidizing agent. Herein, the oxidizing agent may be active gas such as air, oxygen, or the like.

Specifically, the char-containing reinforcement materials are moved, while contained in the cartridge, and then, air is automatically sprayed into the cartridge containing the char-containing reinforcement materials. Through this continuous process, that is, by adding additional air, the char may be removed. Herein, in order to remove the char, heat at a high temperature and air at an appropriate flow rate are required, wherein if the temperature or the air flow rate is low, the char may not be removed, but if the temperature or the air flow rate is too high, the char may not be completely removed, but the reinforcement materials may be damaged, resulting in property deterioration. Accordingly, because appropriate temperature, time, and air flow rate are important, in order to remove the char, the temperature may be controlled within a range of 400 °C to 900 °C, the time may be controlled within a range of 10 minutes to 90 minutes, and the air flow rate may be controlled within a range of 5 L/min or more, and specifically, the temperature may be controlled within a range of 500 °C to 800 °C, the time within a range of 30 minutes to 60 minutes, and the air flow rate within a range of 5 L/min. In particular, even if the temperature and time ranges of the sprayed air are controlled, if the air flow rate is less than 5 L/min, the effect of improving the decomposition rate may be minimal.

If the char is not removed, because the char may act as impurities and thus deteriorate the decomposition rate, the char should be removed, but if the char is removed by injecting air as aforementioned, the decomposition rate may increase, but there is a problem that a tensile strength retention rate and an elasticity retention rate may slightly decrease. In order to solve this problem, in the method for manufacturing recycled fibers according to the present invention, the sprayed air flow rate is controlled.

Furthermore, the method for manufacturing recycled fibers according to the present invention may further include exposure of the cartridge to nitrogen after adding the pretreated fiber composite material to the cartridge before exposing the cartridge to the superheated steam or after producing the recycled fibers but before moving the cartridge including the recycled fiber. Herein, the method for manufacturing recycled fibers according to the present invention may be more advantageous to prevent the decrease phenomenon of the tensile strength retention rate and the elasticity retention rate of the recovered recycled fibers.

In this way, the reinforcement materials from which the char is removed are automatically moved, while contained in the cartridge, from which the reinforcement materials (recycled fibers) are collected, obtaining the recycled fibers. This recovered recycled fibers are checked with respect to a weight and also, with respect to properties by finally calculating a decomposition rate and a yield.

The recycled fibers (reinforcement materials) are measured with respect to tensile strength in a single fiber method (ASTM C1557-03). The single fiber method is to separate one strand with 25 mm or more from the reinforcement materials and 30 times or more measure the tensile strength at 1 mm/min with a grip spacing 25 mm at an initial load of 1 cN/tex by using a universal testing machine (UTM) to calculate an average value thereof.

According to the method for manufacturing recycled fibers of the present invention, because i) the fiber composite materials ae pretreated before the use, ii) a series of automatic processes of a cartridge push method is adopted unlike a conventional roller process, iii) a gaseous matrix resin is condensed into a liquid state by using cooling water and then, removed unlike a conventional process using outside air, iv) the superheated steam is controlled with respect to a temperature, time, and a flow rate in a portion of exposing the superheated steam, and in addition, v) the air is controlled with respect to a temperature, time, and a flow rate in a portion of removing resins, so that the recycled fibers minimized from the property deterioration may not only be recovered, but also the matrix resin simultaneously may be easily obtained in the form of condensate, which is environment-friendly and exhibit very excellent processability, and this method of the present invention is economical, compared with the conventional recycled fiber recovery methods.

Hereinafter, preferred embodiments are presented to aid understanding of the present invention. However, the following examples are merely illustrative of the present invention, and it is clear to those skilled in the art that various changes and modifications are possible within the scope and spirit of the present invention, and it is natural that such changes and modifications fall within the scope of the appended claims.

**Experimental Example**

1. Effect of superheated steam temperature

130 g of a hydrogen tank cut product (50x100 mm) was placed into a cartridge in an inlet of a cartridge push-type automatic recycled fiber-manufacturing device and then, moved to expose the cartridge to superheated steam. Herein, finally recovered carbon fibers were evaluated with respect to a decomposition rate and properties, while the superheated steam was sprayed thereinto by varying its discharging temperature as shown in Table 1, and the results are shown in Table 1. After spraying the superheated steam, the cartridge was moved again and exposed to air by spraying the air, wherein a flow rate of the air was controlled to be 5 L/min. After spraying the superheated steam before spraying the air, cooling water was used to condense and remove a matrix resin decomposed from the hydrogen tank cut product in the cartridge into which the superheated steam was sprayed. After spraying the air, the cartridge was moved to recover carbon fibers from the cartridge.

(Table 1)

| Temperature (°C) | Time (min) | Steam flow rate (kg/h) | Air flow rate (L/min) | Weight (g) | Decompositi on rate (wt%) | Properties (GPa) |
| --- | --- | --- | --- | --- | --- | --- |
| | | | | | | Tensile strength |
| 300 | 90 | 20 | 5 | 130 | 40.06 | 4.66 |
| 400 | | | | | 85.78 | 4.66 |
| 500 | | | | | 88.37 | 4.66 |
| 600 | | | | | 90.13 | 4.62 |
| 700 | | | | | 90.94 | 4.63 |
| 800 | | | | | 95.64 | 4.40 |
| 900 | | | | | 97.00 | 4.11 |
| 1,000 | | | | | 97.90 | 3.94 |

2. Effect of superheated steam flow rate

Experimental Example 2 was performed under the same conditions as in Experimental Example 1 except that the superheated steam flow rate was changed as shown in Table 2 instead of 20 kg/h, and the results are shown in Table 2.

(Table 2)

| Temperature (°C) | Time (min) | Steam amount (kg/h) | Weight (9) | Decomposition rate (wt%) | Properties (GPa) |
| --- | --- | --- | --- | --- | --- |
| | | | | | Tensile strength |
| 800 | 90 | 5 | 130 | 89.54 | 4.43 |
| | | 10 | | 95.85 | 4.41 |
| | | 15 | | 97.36 | 4.40 |
| | | 20 | | 95.64 | 4.40 |
| | | 25 | | 96.51 | 4.11 |
| | | 30 | | 96.16 | 4.10 |
| | | 35 | | 96.17 | 3.93 |

Referring to Table 2, if the superheated steam flow rate was controlled within a range of 10 kg/h to 30 kg/h, the recovered recycled fiber turned out to have excellent decomposition rate and tensile strength.

3. Effects depending on exposure time to superheated steam

Experimental Example 3 was performed under the same conditions as in Experimental Example 1 except that the superheated steam exposure time was changed as shown in Table 3 instead of 90 minutes, and the results are shown in Table 3.

(Table 3)

| Temperature (°C) | Time (min) | Steam amount (kg/h) | Weight (g) | Decomposition rate (wt%) | Properties (GPa) |
|---|---|---|---|---|---|
| | | | | | Tensile strength |
| 800 | 15 | 20 | 130 | 83.22 | 4.65 |
| | 30 | | | 95.02 | 4.71 |
| | 60 | | | 95.51 | 4.56 |
| | 90 | | | 95.64 | 4.40 |
| | 120 | | | 95.21 | 4.53 |
| | 130 | | | 97.00 | 3.77 |

Referring to Table 3, if the superheated steam exposure time was controlled within a range of 30 minutes to 120 minutes, recovered recycled fibers turned out to have excellent decomposition rate and tensile strength.

4. Effect of air flow rate

Experimental Example 4 was performed under the same conditions as in Experimental Example 1 except that the superheated steam exposure time was changed as shown in Table 4 instead of 5 L/min, and the results are shown in Table 4.

(Table 4)

| Air flow rate (L/min) | Decomposition rate (wt%) | Properties (GPa) |
|---|---|---|
| | | Tensile strength |
| 0 | 90.12 | 4.55 |
| 5 | 95.64 | 4.40 |
| 10 | 97.78 | 4.38 |
| 15 | 99.15 | 4.12 |
| 20 | 100 | 4.07 |
| 25 | 100 | 4.03 |
| 30 | 100 | 4.01 |

Referring to Table 4, if an air flow rate of an air inlet portion as well as a temperature, time, and a flow rate of superheated steam of a superheated steam exposure portion was controlled, recovered recycled fibers turned out to have excellent decomposition rate and tensile strength.

Although the preferred embodiments of the present invention have been described in detail above, the scope of the present invention is not limited thereto, and various modifications and improvements made by those skilled in the art using the basic concept of the present invention as defined inc the following claims also fall within the scope of the present invention.

**Claims**

1.    A method for manufacturing recycled fibers, comprising

adding a pretreated fiber composite material to the cartridge;

moving the cartridge to which the pretreated fiber composite material is added;

exposing the cartridge to superheated steam and an oxidizing agent;

removing a matrix resin and char from the pretreated fiber composite material to manufacture a recycled fiber; and

moving the cartridge including the recycled fiber and collecting the recycled fiber from the cartridge.

2. The method of claim 1, wherein

the exposing of the cartridge to superheated steam and an oxidizing agent includes first exposing the cartridge to which the pretreated fiber composite material is added to superheated steam, then moving the cartridge, and exposing it to an oxidizing agent.

3. The method of claim 2, wherein

the method further includes, before first exposing the cartridge to which the pretreated fiber composite material is added to superheated steam, and then exposing it to an oxidizing agent, condensing a gaseous matrix resin decomposed from the pretreated fiber composite material into a liquid state using cooling water and removing it.

4. The method of claim 3, wherein

the condensing of the gaseous matrix resin decomposed from the pretreated fiber composite material into a liquid state using cooling water and removing it includes,

escaping the gaseous matrix resin decomposed from the pretreated fiber composite material from the cartridge by exposure to the superheated steam, reacting it with cooling water separately present in the cartridge, and removing liquid condensate.

5. The method of claim 1, wherein

the oxidizing agent includes air.

6. The method of claim 1, wherein

the fiber composite material includes a matrix resin mixed with 'a carbon fiber, a glass fiber, or a mixture thereof.'

7. The method of claim 6, wherein

the matrix resin includes an aromatic hydrocarbon-based compound.

8. The method of claim 7, wherein

the aromatic hydrocarbon-based compound includes a phenolic compound.

9. The method of claim 7, wherein

the aromatic hydrocarbon-based compound includes bisphenol A and the bisphenol A is included in an amount of greater than or equal to 30 wt% based on a total amount of the aromatic hydrocarbon-based compound.

10. The method of claim 1, wherein

the pretreated fiber composite material is a crushed or cut fiber composite material.

11. The method of claim 1, wherein

the superheated steam has a temperature range of 400 °C to 900 °C.

12. The method of claim 1, wherein

the cartridge to which the pretreated fiber composite material is added is exposed to the superheated steam for 30 to 120 minutes.

13. The method of claim 1, wherein

the exposing to superheated steam includes spraying the superheated steam into the cartridge to which the pretreated fiber composite material is added, wherein the superheated steam is injected into the cartridge at a flow rate of 10 kg/h to 30 kg/h.

14. The method of claim 1, wherein

the exposing to the oxidizing agent includes spraying the superheated steam into the cartridge to which the pretreated fiber composite material is added, and then spraying the oxidizing agent into the cartridge, wherein the oxidizing agent is sprayed at a flow rate of greater than or equal to 5 L/min.

**15.** The method of claim 1, wherein
the method further includes first exposing the cartridge to nitrogen after adding the pretreated fiber composite material to the cartridge before exposing the cartridge to the superheated steam.

**16.** The method of claim 1, wherein
the method further includes first exposing the cartridge to nitrogen after producing the recycled fiber and before moving the cartridge including the recycled fiber.

**17.** The method of claim 1, wherein
the char exists on the surface of the recycled fiber from which the matrix resin is removed.

# FIG. 1

```
              ( Start )
                  │
                  ▼
┌─────────────────────────────────┐
│ The step of inputting the       │      S100
│ preprocessed fiber composite    ├───
│ material into the cartridge     │
└─────────────────────────────────┘
                  │
                  ▼
┌─────────────────────────────────┐
│ The step of moving the cartridge│      S200
│ in which the pre-processed fiber ├───
│ composite material is inputted  │
└─────────────────────────────────┘
                  │
                  ▼
┌─────────────────────────────────┐
│ The step of exposing the        │      S300
│ cartridge to superheated steam  ├───
│ and oxidizer                    │
└─────────────────────────────────┘
                  │
                  ▼
┌─────────────────────────────────┐
│ The step of manufacturing       │      S400
│ recycled fiber by removing      ├───
│ matrix resin and char from      │
│ pre-treated fiber composite     │
│ materials                       │
└─────────────────────────────────┘
                  │
                  ▼
┌─────────────────────────────────┐
│ The step of moving the cartridge│      S500
│ containing recycled fibers, and ├───
│ collecting the recycled fibers  │
└─────────────────────────────────┘
                  │
                  ▼
              ( End )
```

## INTERNATIONAL SEARCH REPORT

| | |
|---|---|
| International application No. | |
| | **PCT/KR2024/006037** |

**A. CLASSIFICATION OF SUBJECT MATTER**

**B29B 17/02**(2006.01)i; **D01G 11/00**(2006.01)i; **B29B 17/00**(2006.01)i; **B29B 17/04**(2006.01)i

According to International Patent Classification (IPC) or to both national classification and IPC

**B. FIELDS SEARCHED**

Minimum documentation searched (classification system followed by classification symbols)

B29B 17/02(2006.01); B29B 17/04(2006.01); C08J 11/10(2006.01); C08J 11/12(2006.01); D01F 9/12(2006.01); D06M 11/74(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재생섬유 (recycled fibers), 탄소섬유복합재료 (carbon fiber reinforced plastic, CFRP), 유리섬유복합재료 (glass fiber reinforced polymer), 매트릭스 수지 (matrix resin), 수지 잔여물 (char), 카트리지 (cartridge), 과열 증기 (superheat steam), 산화제 (oxidant)

**C. DOCUMENTS CONSIDERED TO BE RELEVANT**

| Category* | Citation of document, with indication, where appropriate, of the relevant passages | Relevant to claim No. |
|---|---|---|
| X | JP 6630991 B2 (SHINRYO CORP.) 15 January 2020 (2020-01-15)<br>See paragraphs [0013], [0021]-[0033] and [0042]; and figure 3. | 1,2,5-17 |
| A | | 3,4 |
| A | JP 2013-237716 A (CARBON FIBER RECYCLE KOGYO CO., LTD.) 28 November 2013 (2013-11-28)<br>See paragraphs [0030]-[0039]. | 1-17 |
| A | KIM, K.-W. et al. Recycling and characterization of carbon fibers from carbon fiber reinforced epoxy matrix composites by a novel super-heated-steam method. Journal of Environmental Management. 2017, vol. 203, pp. 872-879.<br>See abstract; and pages 875 and 876. | 1-17 |
| A | CN 114990733 A (ITATSU, Hideto) 02 September 2022 (2022-09-02)<br>See paragraphs [0039]-[0051]. | 1-17 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 August 2024** | **30 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/006037**

C.      DOCUMENTS CONSIDERED TO BE RELEVANT

| Category* | Citation of document, with indication, where appropriate, of the relevant passages | Relevant to claim No. |
|---|---|---|
| A | JP 2017-082036 A (CARBON FIBER RECYCLE KOGYO CO., LTD.) 18 May 2017 (2017-05-18)<br>    See paragraphs [0022]-[0028]. | 1-17 |

Form PCT/ISA/210 (second sheet) (July 2022)

## INTERNATIONAL SEARCH REPORT
### Information on patent family members

| International application No. |
|---|
| **PCT/KR2024/006037** |

| Patent document cited in search report | | | Publication date (day/month/year) | Patent family member(s) | | | Publication date (day/month/year) |
|---|---|---|---|---|---|---|---|
| JP | 6630991 | B2 | 15 January 2020 | CN | 110678507 | A | 10 January 2020 |
| | | | | CN | 110678507 | B | 12 July 2022 |
| | | | | EP | 3626769 | A1 | 25 March 2020 |
| | | | | TW | 2019-00747 | A | 01 January 2019 |
| | | | | US | 11359060 | B2 | 14 June 2022 |
| | | | | US | 2020-0079918 | A1 | 12 March 2020 |
| | | | | WO | 2018-212016 | A1 | 22 November 2018 |
| JP | 2013-237716 | A | 28 November 2013 | JP | 5941747 | B2 | 29 June 2016 |
| | | | | WO | 2013-168302 | A1 | 14 November 2013 |
| CN | 114990733 | A | 02 September 2022 | None | | | |
| JP | 2017-082036 | A | 18 May 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230065165